# EUROPEAN PATENT APPLICATION

(11) **EP 4 248 736 A1**
(43) Date of publication of application: **27.09.2023**
(21) Application number: 23020133.7
(22) Date of filing: 16.03.2023
(51) Int. Cl.: A01G 31/04

(54) **AUTOMATED SYSTEM FOR AEROPONIC CULTIVATION IN ARTIFICIALLY CONTROLLED ENVIRONMENTS WITH VERTICALLY-DIRECTED PLANT CULTIVATION SUPPORTS**

(30) Priority: 21.03.2022 IT 202200005495
(71) Applicant: Localgreen Societa' Agricola Srl, 46031 Bagnolo San Vito (MN) (IT)
(72) Inventor: BECCARI, Lorenzo, 46100 Mantova (MN) (IT); FORATTINI, Paolo, 46027 San Benedetto Po (MN) (IT)
(74) Representative: Camaiora, Daniele

(57) **Abstract**

The present invention relates to an automated system for aeroponic cultivation. The system comprises a plurality of cultivation modules (10), each having receptacles (14) for receiving and supporting the culture plants. The cultivation modules (10) are vertically-directed and arranged in parallel rows and suspended in a sliding manner from a support frame (11) in a cultivation area. The support frame (11) is configured so that the movement of the cultivation modules (10) in the cultivation area is assisted at least in part by the force of gravity. The cultivation modules (10) are each attached to at least one carriage (12) that is movable on a slide rail (13) fixed to the support frame (11). The slide rail (13) is arranged at a predetermined inclination in the cultivation area, so that the movement of the carriage (12) is assisted at least in part by the force of gravity. The cultivation modules (10) are maintained suspended from the slide rail (13) continuously while being moved cyclically to and from said cultivation area.

## Description

### Technical field

The present invention relates to an automated system for aeroponic cultivation of plants, for food, pharmaceutical or ornamental purposes, in artificially controlled environments and with vertically-directed plant cultivation supports.

### Background art

Aeroponic cultivation is a technique for soilless cultivation of plants, i.e. without the use of soil. The plants are germinated on a special substrate, of organic or inorganic material, and then each plant is placed in a suitable container which has the sole function of supporting the plant. This cultivation technique is based on the principle of growing the plants by suspending or placing them on special supports, in an artificially controlled environment, and by spraying the plant roots that protrude from the supports with an atomized nutrient containing solution.

Compared to other soilless cultivation techniques, e.g. hydroponics, in which the roots are immersed in a nutritive liquid, the main advantage of aeroponic cultivation is that it allows air to come into contact with both the leaves and the roots of the plants, so that these grow with an abundant supply of oxygen, carbon dioxide, water and nutrients.

There are known in the art artificially controlled aeroponic and hydroponic cultivation systems with vertically-directed structures, such as cultivation racks or walls, which provide support for the growth of the plants.

Patent publication US 4 965 962 A describes a hydroponic culture system of the kind mentioned above. Here, in particular, are provided angled panels having a plurality of holes for supporting the plants with the roots protruding through the holes into an angular space formed by the angled panels. The angled panels are arranged in rows and are movable on wheels in the longitudinal direction of the rows. The system further comprises a plurality of spraying means equipped with nozzles for spraying an aqueous solution of nutrients on the plant roots. These spraying means are movable along the longitudinal direction of the row of panels, within the angular space formed by the panels. The culture system is arranged in a structure forming an artificially controlled environment, which is sheltered from external weather and solar radiation. The ceiling of this structure is fitted with light fixtures for providing constant light intensity to the culture plants. A known disadvantage of this system is that it lacks a device for automatically handling the panels, and therefore it is necessary to provide adequate space between the adjacent rows of angled panels to allow for the passage of panel handling operators.

Similarly to patent publication US 4 965 962 A, patent publication CA2 875 693 C describes an aeroponic cultivation system in which the culture plants are arranged on a frame which is angled with respect to a horizontal plane.

Patent publication ES 2 061 410 A1 describes a hydroponic cultivation system in which the plants are grown in special box-like containers stacked on top of each other to form movable towers. These towers of containers are introduced into special chambers wherein a movable bridge is installed which slides longitudinally across the top of the chambers. The movable bridge has several vertical bars extending downwards on which fertigation, illumination and aeration means are arranged. The fertigation means are provided with nozzles for spaying a nutrient solution over the culture plants. The nozzles are arranged on the vertical bars of the bridge, at a predetermined distance from each other, so that each nozzle can spray the plants placed in a corresponding container located at the height of the nozzle. A known drawback of this system is that the handling and cleaning of the containers is very costly, because special devices are required for palletising and washing the containers. Having to use palletising devices has the additional disadvantage of increasing the risk of introducing potential contaminants into the production area during the container stacking and unstacking operations. Furthermore, in order to overcome possible problems of instability of the stacked container towers, it is necessary to limit the height of the container towers or to employ a rack or frame for supporting the containers, and this leads to a reduction in production efficiency and an increase in the cost of the system. A further disadvantage of this known system is that it cannot be configured to create a production line capable of continuous operation, rather it is suited for batch production.

Finally, an automated system for aeroponic cultivation according to the preamble of independent claim 1 of the present invention is known from the published patent application US 2015/173315 A1.

From this examination of the known soilless cultivation systems, which appear to be relevant to the subject matter of the present invention, it is understood that such systems have significant disadvantages, not only with regard to their poor functionality and high investment and operating costs, but also in terms of low density of plant culture, and this is because, for a given production or harvest, these known systems require the allocation of a larger space for handling the plant support structures and/or the nutrient solution spraying devices.

Therefore, the task of the present invention is to provide an aeroponic cultivation system that overcomes the aforementioned drawbacks in the art. Within this task, an objective of the invention is, in particular, to provide an aeroponic cultivation system that is significantly more advantageous not only in terms of reduced investment and operating costs, but also in terms of increased production efficiency.

### Summary of invention

This objective is achieved by an automated system for aeroponic cultivation comprising a plurality of cultivation modules, each having receptacles designed to receive and support the culture plants, wherein said cultivation modules are vertically-directed and arranged in parallel rows, and are suspended in a sliding manner from a support frame in a cultivation area, said support frame being configured so that the movement of said cultivation modules in said cultivation area is assisted at least in part by the force of gravity, and wherein said cultivation modules are each attached to at least one carriage that is movable on a slide rail fixed to said support frame, said slide rail being arranged at a predetermined inclination in said cultivation area, so that the movement of the carriage is assisted at least in part by the force of gravity, characterized in that each of said cultivation modules is maintained suspended from said slide rail continuously while being moved cyclically to and from said cultivation area.

The automated system for aeroponic cultivation according to the invention includes fertigation means for spray watering of the culture plants, illumination means for providing artificial illumination to the culture plants, and heating, ventilation, and air-conditioning means for the cultivation area.

In a preferred embodiment of the invention, each cultivation module is comprised of a panel including a plurality of receptacles intended to receive and support the culture plants. The panel has a first side from which the leaf apparatus of the culture plant protrudes, and a second side from which the root apparatus of said culture plant protrudes.

The plant fertigation means comprise a plurality of vertical bars, which are independent of each other and are movable in the space separating the second sides of said cultivation modules arranged in parallel rows. Each of said vertical bars carries spray nozzles for spraying a nutrient solution on the root apparatus of the cultured plants.

Conveniently, troughs are provided for collecting the excess nutrient solution that drips from the cultivation modules. The troughs have surfaces for guiding the vertical bars of the fertigation means and, respectively, of the cultivation modules, so that possible oscillations thereof are avoided during movement.

The illumination means comprise light fixtures arranged at different heights on a support frame placed in the space separating the first sides of said cultivation modules arranged in parallel rows, for illuminating the leaf apparatus of the cultured plants.

The invention also relates to a greenhouse structure which includes a cultivation area with an automated system for aeroponic cultivation as described above. The greenhouse structure includes an area for harvesting mature plants and for transplanting young plants, as well as for washing and disinfecting the cultivation modules. This area is separated from the cultivation area, and drive means are provided for moving the cultivation modules from the cultivation area to the harvesting, washing and disinfection, and transplanting area, and vice versa.

With the configuration of the aeroponic cultivation system according to the present invention as described above, the aim is achieved of increasing production efficiency and reducing the space required for installing the system, as compared to other traditional systems known in the art.

For example, compared to the system described in the patent publication US 4 965 962 A, wherein the distance at the base of the angled panels depends on the measure of the angle between the panels, and the ratio between this distance and the height of the angled panels ranges from about 0.73 to about 2.38, in the system of the present invention the ratio of the distance between the second sides of the cultivation modules arranged in parallel rows and the height of the modules themselves is not greater than 0.2 - 0.3. This allows a greater number of cultivation modules to be installed per unit area, and therefore the cultivation density can be increased.

The higher cultivation density is also achieved thanks to the fact that, according to the invention, the slide rails in the plant cultivation area are arranged inclined, whereby during the growth of the plants the movement of the cultivation modules is assisted in a natural way by the force of gravity. This avoids the need of complex and massive mechanisms for moving the cultivation modules in the cultivation area and, above all, it allows the distance between the parallel rows of cultivation modules to be reduced, because it is no longer necessary for there to be an adequate space between these rows of cultivation modules to allow access and passage of operators assigned to the handling of the cultivation modules.

Another advantage of the invention is given by the fact that the cultivation modules are devised as movable suspended elements, rather than being movable on rails or guides fixed to the ground as known in the prior art, so that not only is the cultivation system has a smaller footprint, but it is even easier to adapt it to a continuous cycle production, thus allowing a significant increase in production efficiency.

A further advantage of the invention is that the cultivation modules are moved in a single centralized area where the operations of harvesting the plants from the cultivation modules, disinfecting these modules and finally transplanting the new young plants or shoots onto the modules take place. This solution makes it possible to reduce the distance between the first sides of the cultivation modules, as it is not necessary to provide access to the space between the modules for harvesting and transplanting operations.

Furthermore, the centralization of these operations in a single area increases the economic efficiency of the system. In fact, a kind of "assembly line" is created, whereby the cultivation modules, while remaining continuously suspended from the slide rails, cyclically pass through the steps of transplanting, stationing in the growth area, harvesting and finally disinfection, and then resume the cycle from the transplanting step. With a so-called "assembly line" configuration of the aeroponic cultivation system according to the present invention, it is sufficient for the movement of the cultivation modules that only one part of the chain is motorized, in particular the section at the exit and entrance of the growth area and where the harvesting, disinfection and transplanting stations are located, and this irrespective of the desired size of the structure, for example a greenhouse, in which the system is installed. Since the cultivation modules, rather than the production operators, move around, this significantly reduces installation and maintenance costs, as well as downtime periods.

### Brief description of drawings

Further features and advantages of the invention will become more apparent from the following description of a preferred but not exclusive embodiment thereof, illustrated by way of example and not limitation in the attached drawings, wherein:
- Figure 1 is a partial front elevation view of the aeroponic cultivation system according to the present invention, showing the details of the cultivation modules and the frame supporting the same,
   Figure 2 is a partial side perspective view of the aeroponic growing system illustrated in Figure 1, e
- Figure 3 is a top plan view of the aeroponic cultivation system according to the present invention.

### Description of a preferred embodiment of the invention

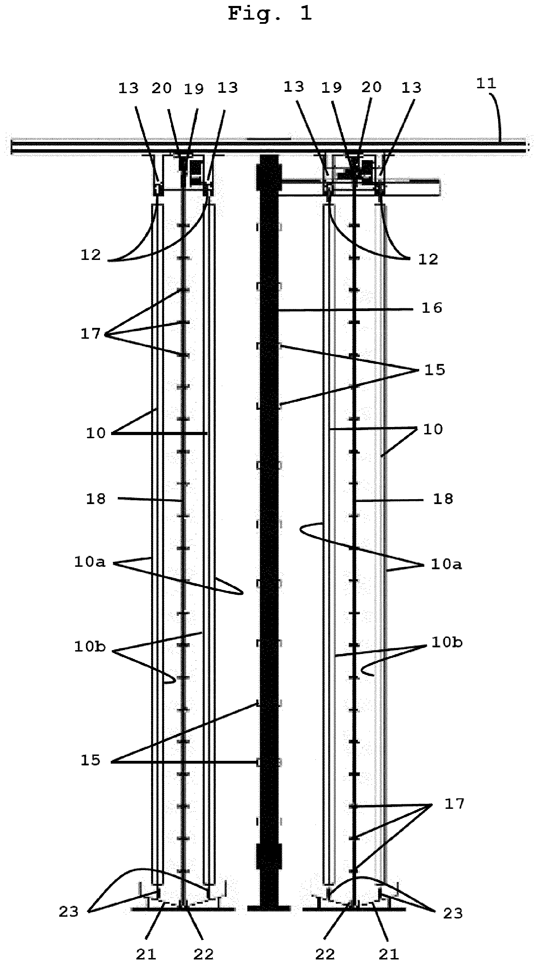

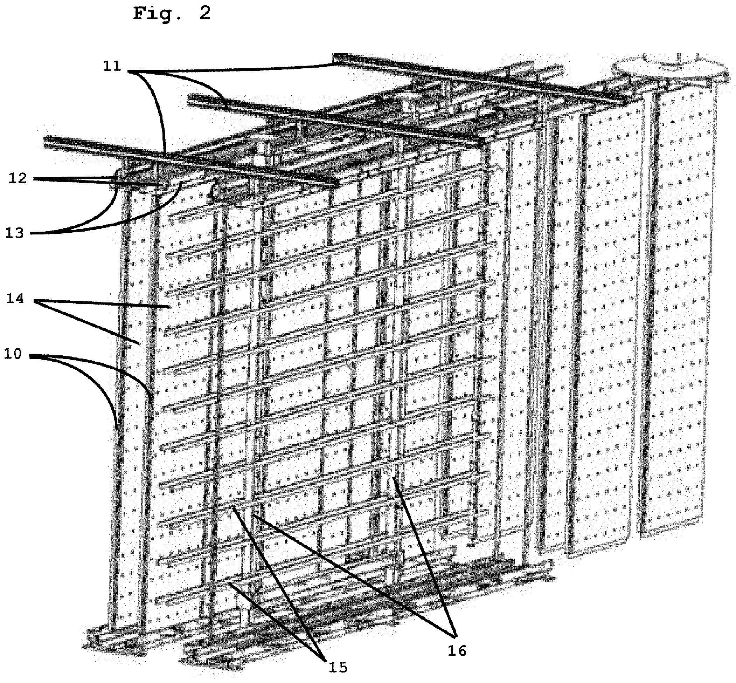

In order to provide a significant advantage over the previously described prior art, in terms of cost reduction and increased production efficiency, the aeroponic cultivation system of the present invention has been designed with an improved configuration described in detail below with reference to Figures 1, 2 and 3 of the drawings, which illustrate a preferred, but not exclusive, embodiment thereof.

The aeroponic cultivation system of the invention comprises a plurality of cultivation modules 10 which are arranged in parallel rows and suspended in a sliding manner from a suitable support frame 11. The support frame 11 is conveniently configured so as to be able to be erected easily inside a greenhouse or another suitable structure, including a pre-existing one. The cultivation modules 10 are attached to special carriages 12 that move on slide rails 13 mounted on the support frame 11. It has been found that with this suspended configuration of the mobile cultivation modules 10, it is easier to adapt the cultivation system to a continuous cycle production. The slide rails 13 are arranged at a predetermined inclination in the cultivation area of the structure, so that the movement of the cultivation modules 10 in this area is assisted by the force of gravity.

Each cultivation module 10 is in the form of a panel made of metal or plastic material and is provided with a plurality of receptacles 14 wherein plant holder containers are housed. The panels forming the cultivation modules 10 have a side 10a, so-called "outer" side, from which the leaf apparatus of the plants protrude, and a side 10b, so-called "inner" side, from which the root apparatus of the plants protrude.

In the space between the outer sides 10a of the cultivation modules 10 arranged in parallel rows, special light fixtures 15 are positioned to provide artificial illumination to the leaf apparatus of the plants. These light fixtures 15 are arranged on a support frame 16 at different heights and are preferably configured as linear light fixtures to direct a luminous flux substantially uniformly towards the outer side 10a of the cultivation modules 10, i.e., towards the side from which the leaf apparatus of the culture plants develops. The light fixtures are conveniently of the light-emitting diode type, but it is also possible to use light fixtures with other types of lamps, such as fluorescent lamps. In a particularly advantageous embodiment, the linear light fixtures are arranged along several parallel rows to form a kind of "Venetian blind" that is only fixed at the top and can be easily moved in the case of maintenance.

The aeroponic cultivation system of the invention also comprises a fertigation device for the culture plants. This fertigation device includes a plurality of spray nozzles 17 which are connected via tubes to a fertigation system (not shown) and are adapted to spray a nutrient solution onto the roots of plants protruding from the plant holder containers in the space between the inner sides 10b of the cultivation modules 10.

The spray nozzles 17, together with the associated nutrient solution supply pipe, are placed on vertical bars 18 preferably suspended from carriages 19 which are movable along guides 20 attached to the support frame 11, so that each vertical bar 18 is movable in the space between the inner sides 10b of the cultivation modules 10 arranged in parallel rows. Since the vertical bars 18 are movable, there is the advantage of fewer nozzles and less piping, and thus less risk of clogging, easier maintenance, and lower system costs. In addition, it is possible to keep the nozzles in operation, thus preventing the interruption of the flow from causing the nozzles to dry out and become clogged. Each vertical bar 18 of the fertigation device can be moved to one end of the corresponding row of cultivation modules 10 and pulled out from the space between the inner sides 10b of the cultivation modules 10, so that it can be easily accessed by operators assigned to maintenance activities, such as cleaning or replacing the spray nozzles.

The mobile fertigation devices, equipped with a nozzle-carrying bar that runs between the inner sides of the cultivation modules 10 arranged in parallel rows, are independent of each other to ensure fertigation even in the event of a bar malfunction.

Excess nutrient solution, which is not absorbed by the plant roots, can drip down the inner side 10b of the cultivation modules 10 and is collected in special troughs 21 arranged underneath the cultivation modules 10. The water and nutrients thus collected, via special pipes and circulation pumps, and after passing through special filters, are subsequently reintroduced into the fertigation system for reuse.

The troughs 21 for collecting the excess nutrient solution are conveniently flared out and are provided with slide surfaces 22 and 23 for the nozzle-carrying bars 18 of the fertigation device and, respectively, for the cultivation modules 10, so as to prevent the same from possibly oscillating during movement.

In order to artificially create the climatic conditions (of temperature and humidity) most suitable for the cultivation of plants, the system of the invention also provides means for heating, ventilation and air conditioning of the cultivation environment. Since these means are of conventional kind and are well known to a person skilled in the art of the invention, it is not deemed necessary to describe them in further detail. It should be noted, however, that the cultivation modules 10 being vertically-directed supports air movement between the modules. Indeed, the absence of obstacles or bulky elements, such as inclined or horizontal planes, or towers of stacked box-like containers of the kind conventionally used in the known systems, advantageously avoids the phenomenon of air stratification and allows for more uniform temperature and humidity conditions within the structure in which the system is installed. In addition, the greater ease of air circulation also allows the lamps of light fixtures to be cooled more efficiently, thus increasing their lifespan and obviating the need to install auxiliary ventilation systems.

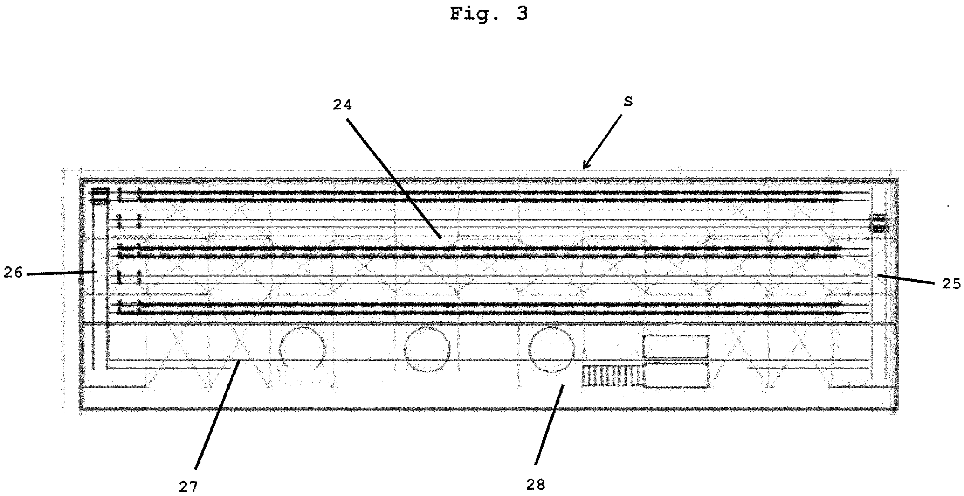

Referring now to Figure 3 of the drawings, there is shown a plan view of a structure S in which the aeroponic cultivation system according to the invention is installed.

The structure S can be divided into three areas, between which the cultivation modules 10 are moved.

There is a first area, so-called "cultivation or storage area", generally denoted by 24, wherein the culture plants arranged on the cultivation modules 10 are illuminated by the light fixtures, on the outer side 10a of the cultivation modules 10, from which the leaf apparatus of the plants protrude, and are exposed to the atomisation of the nutrient solution, on the inner side 10b of the cultivation modules 10, from which the root apparatus of the plants protrude. Advantageously, in this cultivation or storage area the slide rails 13 from which the cultivation modules 10 are suspended are arranged at an angle, so that the force of gravity can be exploited to move the cultivation modules 10 from an entry side 25 to an exit side 26 of the cultivation area 24. This solution allows for a considerable simplification of the system engineering, as no handling devices are required for advancing the cultivation modules 10 and no or limited human intervention is required.

There is in addition a second area, referred to as the "extraction and input loop" and denoted generally by 27, comprising a transport loop, which is at least partially motorized and may include the use of auxiliary transporters or carriages, to carry the cultivation modules 10 exiting the cultivation area 24 via the exit side 26 to an area referred to as the "collection, washing and disinfection, and transplanting area", denoted generally 28 and described below in more detail, and from there back to the cultivation area 24 via the entry side 25.

At the entrance to the cultivation area, a special barcode reader allows for the identification of the incoming cultivation modules 10 in each row and, therefore, enables a timely tracking of their location and, consequently, of the plant variety that is cultured on said cultivation modules.

The third and last area 28, i.e. the harvesting, washing and disinfection, and transplanting area, comprises at least two, preferably three stations at which the operations of harvesting the mature plants, washing and disinfection of the cultivation modules 10 and, respectively, transplanting the young plants onto the cultivation modules 10 directed to the cultivation area 24 take place. Advantageously, the harvesting can be mechanised with a "guillotine" type device that allows the various plant heads to be automatically mowed from the cultivation modules 10 without requiring the intervention of an operator. Conveniently, high-pressure jets of water and disinfectant and/or automatic brushing devices are used for washing and disinfecting the cultivation modules 10.

The separation between the cultivation area 24 and the harvesting, washing and disinfection and transplantation area 28 obviates the need for operators to enter the cultivation area and, therefore, reduces the possibility of contamination with pathogens. Furthermore, movement of the cultivation modules 10 from the cultivation area 24 to the harvesting, washing and disinfection and transplanting area 28, avoids the need for operators to transfer from one place to another, thus reducing operating costs due to downtime and activities with no added value in the production cycle.

With the system of the invention several cultivation areas 24 can be provided, one next to the other, which share a common harvesting, washing and disinfection and transplanting area 28.

The system of the invention is therefore configured in a modular form and allows for a continuous cycle production process, with a loop movement of the cultivation modules 10, similar to what happens in an industrial context with production on an assembly line. In particular, within the harvesting, washing and disinfection and transplanting area 28 the first operative step consists in placing the young plants with their substrates in the plant holders on the cultivation modules 10. Subsequently, the cultivation modules 10 are moved by means of a motorized chain towards the entry side 25 in the cultivation area 24. Arriving at that position, the cultivation modules 10 are introduced into the cultivation area 24 and positioned in such a way that the outer side 10a, from which the leaf apparatus of the plants protrude, is exposed to the lamps of the light fixtures, while the inner side 10b, from which the root apparatus of the plants protrude, is exposed to the spray nozzles of the mobile fertigation device.

During the plant growth period, the cultivation modules 10 progressively advance, by the force of gravity due to the inclination of the slide rails 13, until they reach the exit side 26 of the cultivation area 24 located at the other end of the row of cultivation modules 10, and are then picked up by a motorized chain and transferred to the harvesting, washing and disinfection, and transplanting area 28.

Conveniently, the harvesting, washing and disinfection, and transplantation area 28 is located outside the cultivation area 24 and preferably consists of three stations, namely, a harvesting station, a washing and disinfection station, and a transplantation station, placed next to each other. The cultivation modules 10 are transferred from one station to the next, according to the order of the operations to be performed. In this way, a cyclic process is created in which the operators are only concerned with the operations of harvesting, washing and disinfecting, and transplanting the plants, which they carry out at predetermined fixed points. This solution, as mentioned earlier, avoids the need for operators to transfer from one work position to another, thus reducing downtime periods and costs associated with nonproductive activities without added value.

The stations in the harvesting, washing and disinfection and transplanting area are configured to allow operators to easily access the cultivation modules 10 in order to perform harvesting, cleaning and transplanting operations of the plants. To this end, the cultivation modules 10 may be positioned within each station so as to allow the relevant operations to be performed simultaneously on both sides of the cultivation modules 10. The harvesting and transplanting stations may be equipped with conveyors for evacuating harvested mature plants and, respectively, for feeding young plants to be transplanted. The harvesting and transplanting stations may be equipped with automated harvesting devices.

Also forming an object of the present invention is the greenhouse structure described above containing the aeroponic cultivation system of the invention, as well as a greenhouse element containing said system. Furthermore, it is understood that what is described and illustrated represents only a possible non-limiting embodiment of the invention, which may vary in the forms and arrangements of its parts, without thereby departing from the scope of the concept underlying the invention. The possible presence of reference numbers in the appended claims is solely for the purpose of facilitating their reading in the light of the foregoing description and the appended drawings and in no way limits the scope of protection.

## Claims

1. Automated system for aeroponic cultivation comprising a plurality of cultivation modules (10), each having receptacles (14) for receiving and supporting the culture plants, wherein said cultivation modules (10) are vertically-directed and arranged in parallel rows, and are suspended in a sliding manner from a support frame (11) in a cultivation area, said support frame (11) being configured so that the movement of said cultivation modules (10) in said cultivation area is assisted at least in part by the force of gravity, and wherein said cultivation modules (10) are each attached to at least one carriage (12) that is movable on a slide rail (13) fixed to said support frame (11), said slide rail (13) being arranged at a predetermined inclination in said cultivation area, so that the movement of the carriage (12) is assisted at least in part by the force of gravity, **characterized in that** each of said cultivation modules (10) is maintained suspended from said slide rail (13) continuously while being moved cyclically to and from said cultivation area.

2. Automated system for aeroponic cultivation according to claim 1, **characterized in that** each of said cultivation modules (10) is in the form of a panel with a plurality of receptacles (14) for receiving and supporting the culture plants, said panel having a first side (10a) from which the leaf apparatus of the cultivated plant protrudes, and a second side (10b) from which the root apparatus of said culture plant protrudes.

3. Automated system for aeroponic cultivation according to claim 2, **characterized in that** it includes plant fertigation means (17, 18) comprising a plurality of vertical nozzle-carrying bars (18), which are independent of each other and are movable in the space separating the second sides (10b) of said cultivation modules (10) arranged in parallel rows, each of said bars (18) carrying spray nozzles (17) for spraying a nutrient solution onto the root apparatus of the cultured plants.

4. Automated system for aeroponic cultivation according to claim 3, **characterized in that** troughs (21) are provided for collecting excess nutrient solution dripping from the cultivation modules (10), said troughs (21) being provided with guide surfaces (22) and (23) for said bars (18) of the fertigation means and, respectively, for said cultivation modules (10), so as to avoid possible oscillations thereof during movement in the cultivation area.

5. Automated system for aeroponic cultivation according to claim 1, **characterized in that** it comprises illumination means (15, 16) consisting of light fixtures (15) arranged at different heights on a support frame (16) placed in the space separating the first sides (10a) of said cultivation modules (10) arranged in parallel rows, for illuminating the leaf apparatus of the cultured plants.

6. Greenhouse structure, **characterized in that** it comprises a cultivation area with an automated system for aeroponic cultivation according to any of claims 1 to 5.

7. Greenhouse structure according to claim 6, **characterized in that** it comprises an area for harvesting mature plants and transplanting young plants, and for washing and disinfecting the cultivation modules, said area being separated from the cultivation area, and **in that** drive means are provided for moving the cultivation modules from the cultivation area to the harvesting, washing and disinfecting, and transplanting areas, and vice versa.
